# EUROPEAN PATENT APPLICATION

(11) **EP 4 350 856 A1**
(43) Date of publication of application: **10.04.2024**
(21) Application number: 23199866.7
(22) Date of filing: 26.09.2023
(51) Int. Cl.: H01M 50/207, H01M 50/213, H01M 50/264, H01M 50/30, H01M 50/627

(54) **BATTERY PACK ASSEMBLY**

(30) Priority: 26.09.2022 US 202263409966 P
(71) Applicant: Oasis Aerospace Inc., Edmonton Alberta T6W 0R2 (CA)
(72) Inventor: TISCHER, Eric, Dublin, CA 94568 (US); HOLMES, Scott, Edmonton, AB T6W 0R2 (CA); LOCKWOOD, Thomas, Portsmouth, VA 23703 (US)
(74) Representative: Keller Schneider Patent- und Markenanwälte AG

(57) **Abstract**

A clamshell plate for a battery pack is configured to facilitate connection via adhesive to a plurality of battery cells. The clamshell plate includes: an exterior surface; a recess within the clamshell plate for accommodating a battery cell therein; a channel extending around at least a portion of an inner diameter of the recess in which adhesive can be accommodated to secure the clamshell plate to the battery cell; a manifold opening into the channel; and a vent hole from the channel to the exterior surface of the clamshell plate. A battery pack and a method can employ the clamshell plate.

## Description

### TECHNICAL FIELD

The present invention relates to apparatus and methods for a battery pack.

### BACKGROUND

There is much interest in developing battery-powered vehicles. These applications often require that the battery cells be mechanically coupled together. This is problematic, especially with large numbers of battery cells.

If the technology is to be applied to aircraft, consideration also has to be given to minimize weight and to ensure resistance to shock and vibration failures.

### SUMMARY OF THE INVENTION

In accordance with a broad aspect of the present invention, there is provided a clamshell plate for a battery pack, comprising: an exterior surface; a recess within the clamshell plate for accommodating a battery cell therein; an channel extending around at least a portion of an inner diameter of the recess in which adhesive can be accommodated to secure the clamshell plate to the battery cell; a manifold opening into the channel; and a vent hole from the channel to the exterior surface of the clamshell plate.

In accordance with another broad aspect of the present invention, there is provided a battery pack comprising: a battery cell; and a clamshell plate including: an exterior surface; a recess within the clamshell plate for accommodating the battery cell therein; an channel extending around at least a portion of an inner diameter of the recess in which adhesive can be accommodated to secure the clamshell plate to the battery cell; a manifold opening into the channel; and a vent hole from the channel to the exterior surface of the clamshell plate.

In accordance with another broad aspect of the present invention, there is provided a method for manufacturing a battery pack comprising: inserting a battery into each recess of a plate that is in communication with a manifold enclosed within the plate and having conduit connections to an channel extending along at least a portion of an inner diameter around each recess; injecting adhesive into an inlet port to the manifold such that the adhesive flows through the manifold, through each of the conduit connections and into the channels around the recesses; and continuing to inject the adhesive until an indicator on the plate indicates that the adhesive has flowed around the channel.

It is to be understood that other aspects of the present invention will become readily apparent to those skilled in the art from the following detailed description, wherein various embodiments of the invention are shown and described by way of illustration. As will be realized, the invention is capable of other and different embodiments and its several details are capable of modification in various other respects, all within the present invention. Furthermore, the various embodiments described may be combined, mutatis mutandis, with other embodiments described herein. Accordingly, the drawings and detailed description are to be regarded as illustrative in nature and not as restrictive.

### BRIEF DESCRIPTION OF THE DRAWINGS

Referring to the drawings, several aspects of the present invention are illustrated by way of example, and not by way of limitation, in detail in the figures, wherein:
Figure 1 is a perspective view of a battery pack;
Figure 2 is a side elevation view of the battery pack of Figure 1;
Figure 3 is a top perspective view of a clamshell plate;
Figure 4 is a top plan view of the clamshell plate of Figure 3;
Figure 5 is an enlarged perspective view of a battery cell recess;
Figure 6A, 6B and 6C are sectional views through the battery pack plate of Figure 4, as indicated. Figures 6A and 6B show a battery cell installed in the plate; and
Figure 7 is an enlarged perspective view of another battery cell recess.

### DETAILED DESCRIPTION OF EMBODIMENTS

The detailed description set forth below in connection with the appended drawings is intended as a description of various embodiments of the present invention and is not intended to represent the only embodiments contemplated by the inventor. The detailed description includes specific details for providing a comprehensive understanding of the present invention. However, it will be apparent to those skilled in the art that the present invention may be practiced without these specific details.

An apparatus and method have been invented relating to a battery pack 10. The battery pack includes multiple battery cells 12 held together by at least one clamshell plate. In the illustrated embodiment, there are two clamshell plates: an upper plate 14a and a lower plate 14b. While six battery cells are shown in the embodiments illustrated herein, there may be any number of battery cells secured together with one or more plates in the battery pack. It is noted that clamshell plate is a term in the art and such a plate can have various shapes. For example, as illustrated, a clamshell plate of the type used in a battery pack assembly need not have a concave clamshell shape and need not come together with other plates in a clamshell arrangement. At the same time, however, the clamshell of the present invention need not be shaped only like that illustrated. For example, the clamshell plate of the present need not be flat and need not be rectangular or square.

Useful battery cells 12 are each often cylindrically housed/shaped. For example, D-cell batteries are often used and they have a cylindrical shape with a diameter d_{c} that is known or can be readily determined. The assembly will include a plurality of battery cells 12. The battery cells are all of a similar shape and are arranged side by side, with their lengthwise dimensions substantially in parallel. The clamshell plates 14a, 14b are installed adjacent (i.e. on or near) the ends of the arrangement of battery cells. In particular, each clamshell plate has a plurality of recesses 18. While the illustrated recesses are holes passing fully through the plate, a recess could be an indent that is closed at one end or a tapered hole. Each recess 18 is sized to accommodate an end of one battery cell 12. Therefore, each battery cell has at least one of its ends disposed in a recess a clamshell plate. As illustrated, each battery cell could have (i) its upper end installed in a recess of a top clamshell plate and (ii) its lower end installed in a recess of a lower clamshell plate 14b.

To hold the battery pack together, adhesive 20 is applied to secure the battery cells 12 to the plates 14a, 14b. Adhesive 20 resides between each battery cell and each plate. In the illustrated embodiment, there is a ring of adhesive 20 between the circumference of each battery cell and the inner diameter of the recess.

As noted, the clamshell plates illustrated herein include recesses formed as holes, where each hole is configured for accepting the end of one of a plurality of battery cells. The clamshell plate is secured to the plurality of battery cells by injecting adhesive into an annular space between the circular surface that is the recess hole inner diameter and each battery circumference orthogonal to its long axis. The adhesive is selected to be injectable such as anywhere from a flowable paste to a pourable liquid.

To provide a good adhesion and to facilitate operations, it has been found that the adhesive should be substantially continuous about approximately one half of, and possibly about the full, circumference of each battery cell and the adhesive should be neatly contained in the annular space. The decision on the degree to which the adhesive extends around the battery cell may be dependent on any of the desired weight, adhesive cost, expected need for greater adhesion, etc.

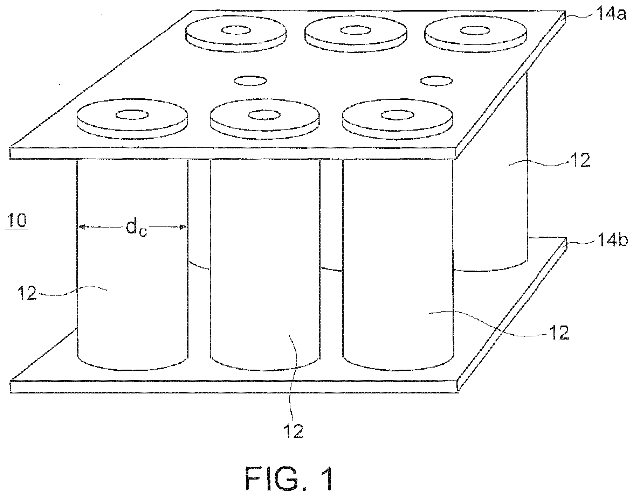

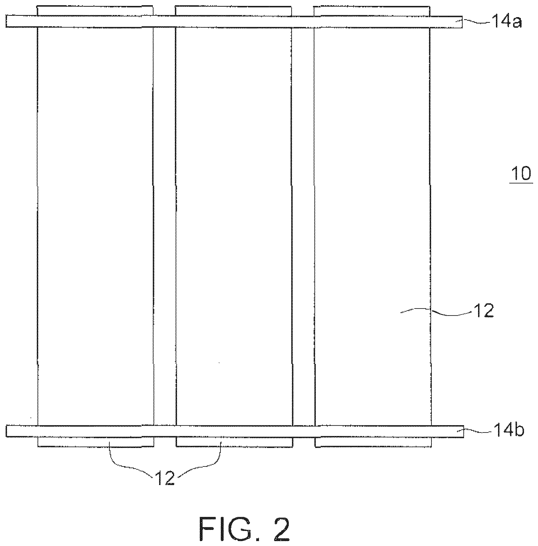

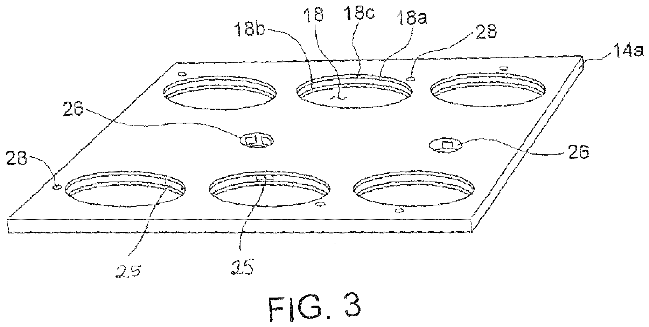

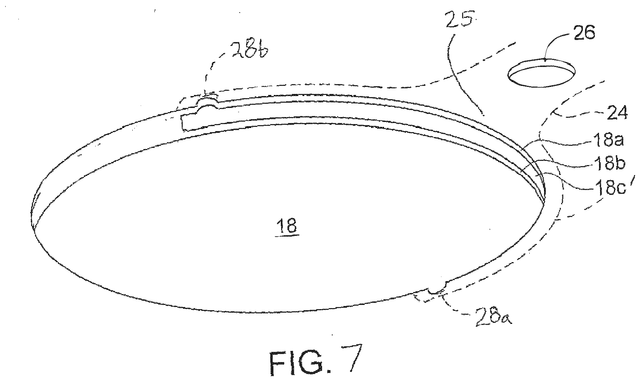

To accomplish these goals, each battery recess has a groove around at least one half of its inner diameter, which can accommodate and retain adhesive. The grooves are formed within the thickness of the clamshell plate. In the illustrated embodiment, each recess 18 includes an annular groove defined between an upper rim 18a and a lower rim 18b. Upper rim 18a has a diameter dᵣₘ just slightly larger than the diameter d_{c} of the battery cell that is to be received in the recess and lower rim 18b has a diameter similar to and centred on the upper rim. Between the upper rim and the lower rim is a groove that forms a channel 18c, 18c' that extends at least partly around the recess. The channel has a diameter d_{rc} that is larger than the diameters of the rims such that a groove with a depth is formed around the recess in the thickness of the plate. There is an channel 18c, 18c' open on the inner diameter of each recess hole. As shown in Figure 7, channel 18c' extends only part way, approximately 180° around the inner circumference of its recess hole. In Figures 1-5, the channel is an annular channel 18c that extends around the entire inner circumference of each recess hole.

When the battery cell is positioned in its recess 18, the upper rim 18a and the lower rim 18b are in close contact with the sides of the battery and the channel 18c, 18c' is open to the circumference of the outer surface of the battery cell. There is a space, therefore, between the depth of the channel and the inner edges of the rims, which is where the outer surface of the battery cell 12 will bear. The channel can accommodate the adhesive 20 therein and the rims can, by close fit against the battery cell outer surface, prevent the adhesive from leaking out of the channel.

While adhesive could be introduced into the channel grooves by various means, a manifold arrangement 24 may be employed to direct and feed adhesive to a plurality of battery recesses simultaneously. Therefore, in one embodiment, between a plurality of the battery recesses, there is a manifold 24 (shown in dashed lines) that opens to a plurality of annular channels. The manifold is a conduit formed and enclosed within the thickness of the clamshell plate. The manifold has conduit connections to all of the annular channels that it is to service.

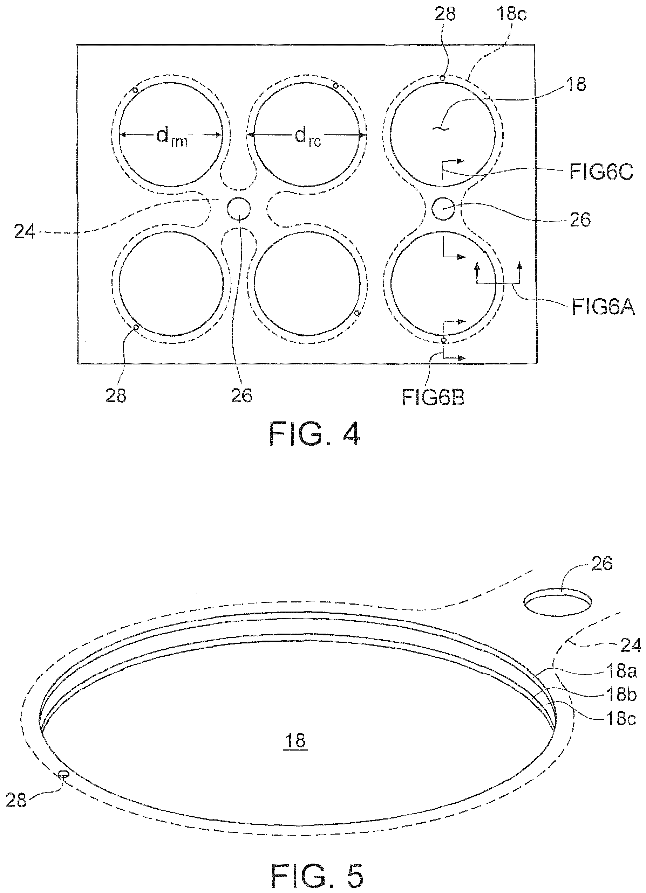

Looking at the illustrated embodiment of Figure 4, for example, the four recesses 18 on the left hand side are accessed through one manifold and the two recesses on the right hand side are accessed through a separate manifold between them. It is to be appreciated that a manifold can open into any number of recesses, not just two or four.

The interconnected manifold 24 and plurality of annular channels 18c allow an applicator to dispense adhesive in one location: into the manifold 12. As the adhesive is injected, it flows from injection site through the manifold to the multiple annular channels in communication via connections 25 to the manifold. The adhesive is, therefore, introduced around the circumferences of the plurality of the battery cells. Using basic tools, multiple battery cells can be glued to a plate simultaneously, reducing labor cost as well as capital equipment costs.

Adhesive can be introduced to the manifold via various means. In one embodiment, if the clamshell material is penetrable by a needle, the adhesive can be injected via a needle to the manifold. For example, if the clamshell material is soft or meltable, a needle injector can be inserted through the clamshell material to access the manifold and then the adhesive can be injected. In another embodiment, the clamshell plate can include an inlet port. The inlet port extends from an outer surface of the clamshell plate to the manifold. The inlet port can extend from a side edge or from one of the planar upper or lower surfaces of the plate to open into the manifold.

In the illustrated embodiment, there are inlet ports 26 from the exterior, planar surface of the plate to manifolds 24. Looking at the illustrated embodiment of Figure 4, for example, the manifold for the four recesses 18 on the left hand side is accessed via the left hand side port 26 and the manifold for the two recesses on the right hand side is accessed via port 26 on the right hand side.

Adhesive injected at an inlet port 26 flows through its manifold and out through the plurality of annular channels 18c towards the recesses. The port 26, of course, only extends through one side planar surface of the plate, so that the injected adhesive is forced to move through the path.

To ensure that the adhesive properly migrates partially or fully around the battery cells, indicators on the clamshell plate provide visual verification that glue has been injected and flowed into the groove of every recess. The indicator can be a window, a colour changing patch, or a vent hole. There may be more than one indicator per recess. In one embodiment, the indicator is one or more vent holes 28. A vent hole is a physical hole through the rim that extends from the channel 18c to an outer surface of the plate. Each annular channel 18c around each cell recess 18 can have a vent hole 28. When adhesive begins to emerge from that channel's vent hole, this provides a visual indication that the adhesive has flowed a selected distance around the entire channel.

Each vent is positioned at the point where the adhesive is intended to at least reach. For example with reference to Figure 7, if the manufacture process requires that the adhesive reach at least half of the full circumference, then a vent hole may be positioned about 90° around the recess, from where the manifold connection 25 opens into the channel 18c'. In such an embodiment, there may be two vent holes 28a, 28b diametrically opposite each other across the recess and each about 90° around the recess, from where the manifold connection opens into the annular channel.

As another example with reference to Figures 1-5, if the manufacture process indicates that the adhesive should fully encircle the battery cell, then vent hole 28 may be positioned across the recess, such as diametrically opposite across the recess, from where the manifold connection opens into the annular channel.

Vent holes 28, 28a, 28b can each be a distinct hole spaced from the rim edge of the recess or they can each be a notch in the rim (Figure 7). All the vent holes may be on the same side of the plate, so they can all be observed at the same time. Typically, the vent holes 28, 28a, 28b are open on the same side of the plate on which the port 26 opens. This is generally the planar side of the plate that forms an exterior surface of the battery pack, so that the vents are easily visible from the environment around the battery pack.

It is noted above that this illustrated embodiment has recesses 18 formed as holes through the clamshell plates. In particular, in this embodiment, each battery recess 18 is a hole that extends fully through its plate such that the upper end of each battery cell protrudes up through the plate. The annular channels are formed between an upper end of the hole, which is upper rim 18a, and a lower end of the hole, which is lower rim 18b. The upper and lower ends of each hole have a diameter that closely fits against the outer diameter of the battery cell to be installed therein. As such, the close tolerance fit between the hole upper and lower rims and the battery exterior surface creates a seal to prevent leakage of adhesive from the annular channels during the injection process. At the same time, the holes permit the clamshell plate to be used on any shape battery terminal end surface and the hole leaves the battery terminal ends exposed for connection to contacts, etc.

If it is found that leakage of adhesive does occur, for example, from between the plate and the battery cell outer surface a sealant can be applied about the interface between the plate and the battery cell. For example, a liquid sealant such as Locktite^{™} can be applied to the edge of the recess from the exterior surface prior to introducing the adhesive. The liquid sealant dries to form a seal about the rim and the battery outer surface, which will deter the adhesive from leaking out.

While an embodiment is described where recess 18 is a hole passing fully through the plate, it is to be appreciated that the present invention of annular channels and indicators can be used even where the recesses are indents on one side of the plate or are tapered holes with one rim 18a or 18b smaller in diameter than the other rim. In such an embodiment, the adhesive seal from the battery cell may be positioned in whole or in part against an upper end or shoulder of the battery cell, rather than just against the side surface as described above.

In aircraft applications, weight is an important consideration. Therefore, the amount of adhesive applied can be controlled by the size of the annular channels. It has been found that channels of less than 3mm depth and height are more than adequate to hold the battery pack together. The plates may be only slightly thicker than the annular channel and therefore may be less than 5mm. With such a thin plate, advantageously most of the battery cell, such as a D-cell battery, is left exposed and open for airflow therepast. Therefore, the channels maintain the adhesive within the thickness of the plate. In one embodiment, the annular channel has a depth of less than 2mm.

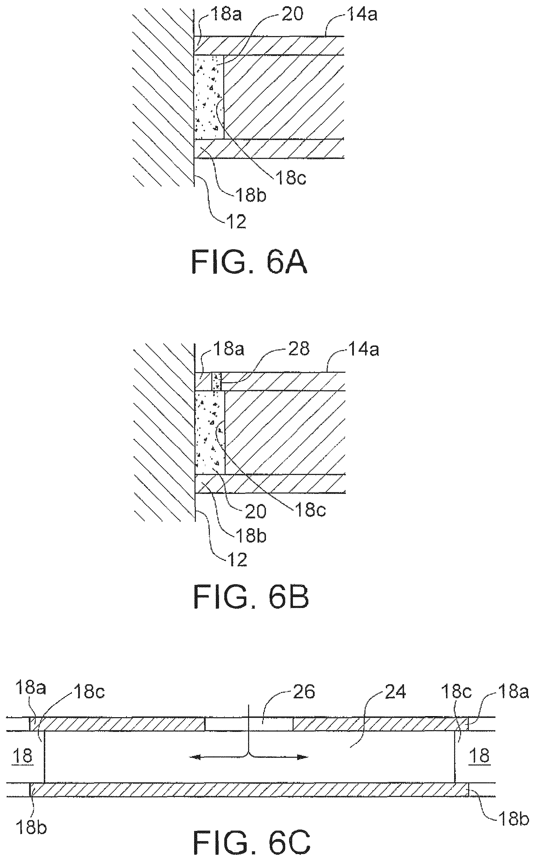

While the clamshell plate may be constructed by various methods, in one embodiment (Figures 6A, 6B) the clamshell plate may be constructed as a laminate of at least three plate layers. A middle layer can include cutouts that form the manifold lateral shape, the communication conduits and the recesses with diameter d_{rc} defining the depth of the annular channels. A top and bottom layer can be attached, as by adhesives or polymeric welding, onto an upper surface and a lower surface, respectively of the middle layer. Each of the top and bottom layer can include holes of diameter dᵣₘ that can be positioned over the middle layer cutouts with diameter d_{rc} and with a solid portion to close in the manifold cutout. The holes of diameter dᵣₘ will define the rims 18a, 18b of the recesses. One of the top or the bottom layers can further include the input ports 26 positioned in alignment with any manifold cutouts in the middle layer. One of the top or the bottom layers can also include the holes or notches 28 to create the vent holes. One of the top or the bottom plates generally has both the ports 26 and the holes or notches 28.

A method for manufacturing a battery pack, may include: inserting a battery into each recess of a plate that is in communication with a manifold enclosed within the plate and having conduit connections to an annular channel around each of the recesses. The method may then proceed by injecting adhesive into an inlet port that is in fluid communication with the manifold. In this step, the adhesive flows through the manifold, then through each of the conduit connections and then into the annular channels around the recesses. The injecting step continues until an indicator on the plate indicates that the adhesive has flowed entirely around the annular channels, to surround the batteries. In one embodiment, the indicator is a vent hole opening from the annular channel in a position across the recess from the conduit connection opening to that annular channel and the injecting step continues until adhesive is visible through, and possibly emerges from, the vent hole.

The previous description of the disclosed embodiments is provided to enable any person skilled in the art to make or use the present invention. Various modifications to those embodiments will be readily apparent to those skilled in the art, and the generic principles defined herein may be applied to other embodiments without departing from the spirit or scope of the invention. Thus, the present invention is not intended to be limited to the embodiments shown herein, but is to be accorded the full scope consistent with the claims, wherein reference to an element in the singular, such as by use of the article "a" or "an" is not intended to mean "one and only one" unless specifically so stated, but rather "one or more". All structural and functional equivalents to the elements of the various embodiments described throughout the disclosure that are known or later come to be known to those of ordinary skill in the art are intended to be encompassed by the elements of the claims. Moreover, nothing disclosed herein is intended to be dedicated to the public regardless of whether such disclosure is explicitly recited in the claims. No claim element is to be construed under the provisions of 35 USC 112, sixth paragraph, unless the element is expressly recited using the phrase "means for" or "step for".

## Claims

1. A clamshell plate for a battery pack, comprising:
an exterior surface;
a recess in the clamshell plate for accommodating a battery cell therein;
a channel extending around at least a portion of an inner diameter of the recess in which adhesive can be accommodated to secure the clamshell plate to the battery cell;
a manifold opening into the channel; and
a vent hole from the channel to the exterior surface of the clamshell plate.

2. The clamshell plate of claim 1 wherein the channel is an annular channel.

3. The clamshell plate of claim 1 wherein the vent hole is positioned about 90° around the recess from where the manifold opens into the channel.

4. The clamshell plate of claim 1 wherein the vent hole is positioned diametrically across the recess from where the manifold opens into the channel.

5. The clamshell plate of claim 1 further comprising an injection port extending from a planar side of the exterior surface of the clamshell plate to the manifold and the vent hole is on the planar side.

6. The clamshell plate of claim 1 further comprising a plurality of additional recesses, each having an adhesive channel and the manifold is additionally in fluid communication with the adhesive channels of the plurality of additional recesses.

7. A battery pack comprising:
a battery cell; and
a clamshell plate including:
an exterior surface;
a recess in the clamshell plate for accommodating the battery cell therein;
a channel extending around an inner diameter of the recess in which adhesive can be accommodated to secure the clamshell plate to the battery cell;
a manifold opening into the channel; and
a vent hole from the channel to the exterior surface of the clamshell plate.

8. The battery pack of claim 7 wherein the vent hole is positioned at least 90° around the recess from where the manifold opens into the channel.

9. The battery pack of claim 7 further comprising an injection port extending from a planar side of the exterior surface of the clamshell plate through the plate to the manifold and the vent hole is on the planar side.

10. The battery pack of claim 7 further comprising a plurality of additional recesses, each having an annular adhesive channel and the manifold is additionally in fluid communication with the annular adhesive channels of the plurality of additional recesses.

11. The battery pack of claim 7 wherein the recess is a hole and the channel encircles side walls of the battery cell, while a first end and an opposite end of the battery cell are exposed on the sides of the clamshell plate.

12. A method for manufacturing a battery pack comprising:
inserting a battery into each recess of a clamshell plate that is in communication with a manifold enclosed within the clamshell plate and having conduit connections to a channel around each recess;
injecting adhesive into the manifold such that the adhesive flows through the manifold, through each of the conduit connections and into the channels around the recesses; and
continuing to inject the adhesive until an indicator on the plate indicates that the adhesive has flowed around the channels.

13. The method of claim 12, wherein the indicator is a vent hole that opens between the channel and an outer planar surface of the clamshell plate, and continuing to inject proceeds until the adhesive is visible in the vent hole.

14. The method of claim 12, wherein inserting a battery positions the channel around side walls of the battery, while a first end and an opposite end of the battery cell are exposed on planar sides of the clamshell plate.
